# EUROPEAN PATENT APPLICATION

(11) **EP 4 648 352 A1**
(43) Date of publication of application: **12.11.2025**
(21) Application number: 24219399.3
(22) Date of filing: 12.12.2024
(51) Int. Cl.: H04L 9/08, H04B 10/70

(54) **OPTICAL TRANSMITTER FOR A QUANTUM KEY DISTRIBUTION SYSTEM OR QUANTUM RANDOM NUMBER GENERATOR**

(30) Priority: 10.05.2024 GB 202406644
(71) Applicant: Kabushiki Kaisha Toshiba, Tokyo 105-0023 (JP)
(72) Inventor: LO, Yuen San, Cambridge, CB4 0GZ (GB); WOODWARD, Robert Ian, Cambridge, CB4 0GZ (GB); PARAISO, Taofiq Kolawole, Cambridge, CB4 0GZ (GB); SMITH, Peter Raymond, Cambridge, CB4 0GZ (GB); DYNES, James F., Cambridge, CB4 0GZ (GB); SHIELDS, Andrew James, Cambridge, CB4 0GZ (GB)
(74) Representative: Marks & Clerk LLP

(57) **Abstract**

An optical transmitter comprising: a laser source configured to generate pulses of light for output by the transmitter; a pump for the laser source; and a light source configured to emit photons via spontaneous emission, the light source being coupled into the cavity of the laser such that the photons emitted by the light source will seed the pulses of light generated by the laser, each successive pulse having a random phase.

## Description

### FIELD

Embodiments described herein relate to an optical transmitter for a quantum key distribution system or a quantum random number generator.

### BACKGROUND

The generation of optical pulses at high speeds with random phases is a key component for quantum communication systems. Most protocols in quantum communication, including decoy-state quantum key distribution (QKD), measurement device independent (MDI) QKD, twin-field (TF) QKD and asynchronous MDI-QKD require the optical pulses transmitted to have random phases. The generation of optical pulses with random phases is also the basis of quantum random number generator (QRNG) based on phase noise.

Conventional QKD transmitters and QRNGs both rely on the spontaneous emission process in gain-switched distributed feedback (DFB) diode lasers for phase randomisation. During gain switching, the DFB laser is periodically driven below and above the lasing threshold to generate a train of pulses. When the laser is driven below the threshold, lasing is inhibited and spontaneous emission becomes the dominant emission process. When the laser is driven above the threshold again, the generation of the optical pulses is seeded by the spontaneous emission photons present in the laser cavity. As a result of each optical pulse being seeded by spontaneous emission, the pulses are all provided with a random phase.

A problem that arises in conventional systems is that when the laser is driven below the lasing threshold, photons from the previous pulse generation event may still reside in the laser cavity. If the next pulse generation event is seeded by these residual photons, the newly generated pulse will inherit the phase from the previous pulses, thus introducing phase correlation between pulses. To mitigate this, it is necessary to provide sufficient "downtime" for the laser between pulses; in other words, the laser must remain beneath the lasing threshold for long enough to ensure that all residual photons have escaped from the laser cavity and spontaneous emission photons have become the dominant photons in the cavity. As a result of this prolonged downtime, however, the maximum clock rate at which a laser can be operated is restricted, limiting the pulse generation rate and therefore the performance.

The conventional approach also requires careful optimization on the driving condition of the laser diode due to its complex dynamics. For example, if the bias current of the laser is too high, phase correlation can also occur between pulses. For long term operation, the laser can also deviate from the optimal driving condition and deteriorate the phase randomisation effect.

### BRIEF DESCRIPTION OF DRAWINGS

Embodiments of the invention will now be described by way of example with reference to the accompanying drawings in which:
Figure 1 shows a system comprising a QKD transmitter according to an embodiment;
Figure 2 shows a system comprising a Quantum Random Number Generator (QRNG) according to an embodiment;
Figure 3 shows intensity distributions seen when successive pulses output by a conventional laser diode are interfered with one another by passing the pulses through an asymmetric Mach-Zehnder interferometer;
Figure 4A shows the intensity distribution obtained during experiments in which a standard laser diode is gain-switched at 8GHz and the output pulses are sent into an asymmetric Mach-Zehnder interferometer;
Figure 4B shows the autocorrelation of pulses for the same experimental setup as in Figure 4A;
Figure 5A shows the intensity distribution obtained during experiments in which pulses are seeded by spontaneous emission of photons from an external light source at 8GHz, according to an embodiment;
Figure 5B shows the autocorrelation of pulses for the same experimental setup as in Figure 5A;
Figure 6A shows the intensity distribution obtained during experiments in which a standard laser diode is gain-switched at 10GHz and the output pulses are sent into an asymmetric Mach-Zehnder interferometer;
Figure 6B shows the autocorrelation of pulses for the same experimental setup as in Figure 6A;
Figure 7A shows the intensity distribution obtained during experiments in which pulses are seeded by spontaneous emission of photons from an external light source at 10GHz, according to an embodiment;
Figure 7B shows the autocorrelation of pulses for the same experimental setup as in Figure 7A;
Figure 8A shows a magnified view of the auto-correlation results of Figure 5B; and
Figure 8B shows a magnified view of the auto-correlation results of Figure 7B.

### DETAILED DESCRIPTION

According to a first embodiment, there is provided an optical transmitter comprising:
a laser source configured to generate pulses of light for output by the transmitter;
a pump for the laser source; and
a light source configured to emit photons via spontaneous emission, the light source being coupled into the cavity of the laser such that the photons emitted by the light source will seed the pulses of light generated by the laser, each successive pulse having a random phase.

The laser source may be a gain-switched laser source.

The light source may be an amplified spontaneous emission, ASE, light source. The light source may be any one of a superluminescent diode, a semiconductor optical amplifier, and a fiber amplifier.

The optical transmitter may further comprise an optical filter for selecting one or more wavelengths of light from the light source to be coupled into the cavity of the laser.

The optical transmitter may further comprise an optical amplifier for amplifying the light output by the light source prior to its being coupled into the cavity of the laser.

The optical transmitter may further comprise an optical filter for filtering the pulses generated by the laser source.

The laser source may be a solid state laser source. The laser source may be a distributed-feedback, DFB, laser.

According to a second embodiment, there is provided a quantum key distribution, QKD, system comprising an optical transmitter according to the first embodiment.

The QKD system may comprise an interferometer comprising a first arm and a second arm. Each pulse output by the transmitter may be input to the interferometer. The first arm of the interferometer may comprise a delay line. The second arm of the interferometer may comprise a phase modulator.

The QKD system may comprise an intensity modulator for modulating the intensity of pulses output by the transmitter.

According to a third embodiment, there is provided a quantum random number generate, QRNG, comprising an optical transmitter according to the first embodiment. The QRNG may comprise an interferometer comprising a first arm and a second arm. Each pulse output by the transmitter may be input to the interferometer. The first arm may of the interferometer may comprise a delay line. The QRNG may comprise a photodiode for detecting the pulses that travel along the first and second arms of the interferometer.

Embodiments described herein provide a simple means for transmitting a train of optical pulses having random phases. Embodiments can facilitate the robust and highspeed operation of both a QKD and a QRNG.

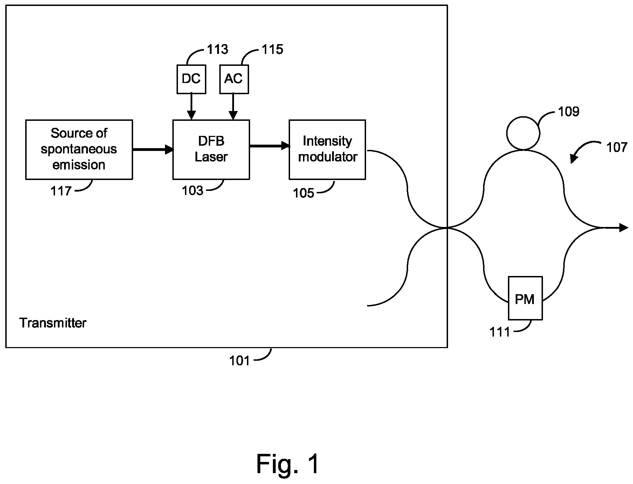

Figure 1 shows an example of an optical transmitter 101 for use in a QKD system, according to an embodiment. The transmitter 101 comprises a gain-switched laser 103 that is used to generate a train of phase-randomised pulses. The pulses are output through an intensity modulator 105 and an asymmetric Mach-Zehnder interferometer 107 with a delay line 109 and a phase modulator 111.

In the present embodiment, the gain-switched laser 103 comprises a solid state diode laser, in the form of a distributed feedback (DFB) laser. The gain-switched laser 103 is pumped electronically, having a DC bias 113 and an AC input 115 that can be used to modulate the gain of the laser 103 and drive it above and below the lasing threshold.

The transmitter 101 also comprises a light source 117 that serves as a source of spontaneous light emission. The light source comprises an amplified spontaneous emission (ASE) light source, such as a superluminescent diode (it will be appreciated that other forms of ASE may also be used, including a semiconductor optical amplifier or fiber amplifier, for example). The photons emitted by the light source 117 are injected into the cavity of the gain-switched laser diode 103. If a high injection power is required, the spontaneous emission from the source 117 may be amplified using an optical amplifier such as an erbium-doped optical fiber (not shown in Figure 1); alternatively, an amplified spontaneous emission light source, such as a superluminescent diode, may be used as the light source 117. An optical filter can be used to reject any unwanted wavelengths of light from entering the laser cavity.

By injecting spontaneously emitted photons from the source 117 into the cavity of the gain-switched laser 103, it is possible to increase the number of spontaneous emission photons present in the cavity, such that they dominate the laser cavity even with the presence of residual (stimulated emission) photons from an earlier pulse generation event. Thus, each time the gain-switched laser is driven above the lasing threshold, the ensuing laser pulse will be seeded by the spontaneous emission photons injected into the cavity from the source 117, rather than residual photons from an earlier pulse generation event. Following this, it is possible to reduce the downtime required before driving the gain-switched laser above the lasing threshold each time, in turn allowing the gain-switched laser to operate at higher pulse repetition rates. In this way, embodiments allow the generation of a phase-randomized pulse train at a clock rate surpassing the current state-of-the-art QKD systems.

The optical transmitter 101 may be embodied as an on-chip light source producing a train of pulses with random phase. The transmitter may be used in a QKD system that implements any one of BB84, MDI QKD or other QKD protocols requiring phase-randomised coherent states.

In addition to QKD systems, the components of the transmitter shown in Figure 1 can be used to enhance the operation of quantum random number generators QRNGs. Conventional QRNGs rely on detecting the fluctuation in the intensity of light output by a spontaneous emission light source. The intensity fluctuation caused by spontaneous emission has a quantum mechanical origin and follows a Gaussian distribution. However, the intensity fluctuation resulting from classical noise also has a Gaussian distribution. Hence, for conventional QRNGs that exploit the intensity fluctuation due to spontaneous emission, additional precautions are necessary to guarantee that the extracted randomness originates from quantum mechanical effects rather than classical ones. Such precautions complicate the real-world operation of the QRNG. For example, current approaches quantify the level of electronic noise when the spontaneous emission light source is switched off; however, it is challenging to monitor this during real-time operation.

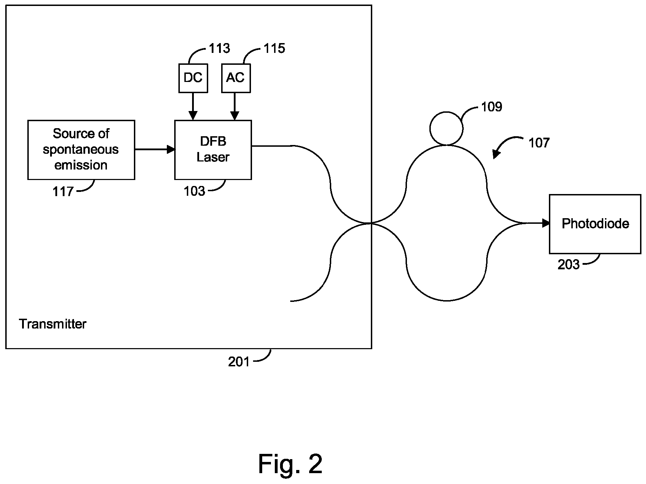

In contrast to the conventional approaches, embodiments described herein facilitate the implementation of a QRNG by using the randomness in the phase of the spontaneous emission photons, rather than the fluctuation in intensity; that is, embodiments exploit the intrinsic randomness in the phase of the photons, rather than their intensity fluctuation. By ensuring that the phase of each successive phase in the train of pulses is randomised with respect to the other pulses, it is possible to adopt the conventional method of measuring phase in the QRNG based on phase noise. Figure 2 shows an example of how such a QRNG may be achieved in practice. The QRNG includes a transmitter 201 whose components are the same as the transmitter of Figure 1, with the exception that the transmitter 201 does not include an intensity modulator 105. The pulses output by the gain-switched DFB laser 103 are input into the interferometer 107 and the intensity distribution at the output of the interferometer 107 is measured on a photodiode 203. Here, the intensity distribution will follow an arcsine distribution, which is different from the distribution originated from electronic noise. As a result, it is possible to actively monitor the quantum nature of the randomness generated by the system during its operation in real time. Moreover, the described embodiment improves the long-term operational stability of the QRNG, providing a system that is less sensitive to fluctuation in laser dynamics and external disturbance.

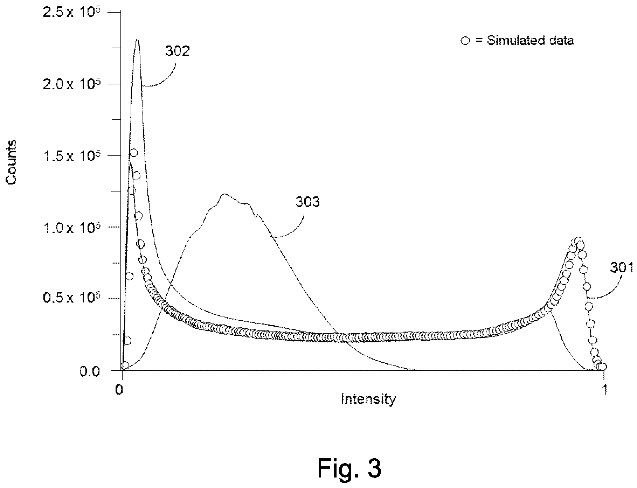

The reduction in laser downtime afforded by embodiments described herein can be further appreciated with reference to Figures 3 to 8.

Figure 3 shows the intensity distribution seen when successive pulses output by a conventional laser diode are interfered with one another by passing those pulses through an asymmetric Mach-Zehnder interferometer. If interfering two coherent pulses with a constant phase difference *ΔΦ*, the output intensity *I* will be proportional to (1 + *cos ΔΦ).* Following this, if the downtime between pulses is long enough, and the phase distribution is uniform, an arcsine distribution should be seen in the intensity distribution, with characteristic double peaks at both ends. This is the case where the interval between pulses is 125 ps (line 301) and to a lesser extent, where the interval between pulses is 83 ps (line 302). In contrast, at high repetition rates, where the down-time between lasing is short, the residual photons from the preceding pulses do not have sufficient time to exit the laser cavity. Here, the next pulse to be generated is seeded on the residual photons left from the previous pulse. Line 303 in Figure 3 shows the intensity distribution for the case where the interval between pulses is much shorter at 42ps; in this case, the arcsine distribution is no longer seen, indicating that the phase of successive pulses are not random, but instead are correlated with one another.

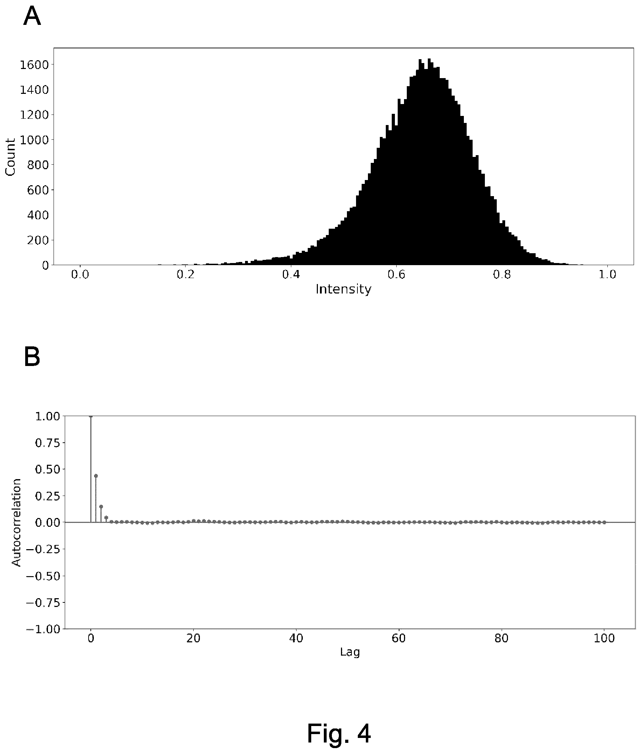

Figure 4A shows the intensity distribution obtained during experiments in which a standard laser diode is gain-switched at 8GHz and optical pulses so generated are sent into an asymmetric Mach-Zehnder interferometer with the output of the interferometer being measured with a photodiode. As shown in Figure 4A, the intensity distribution does not follow the typical arcsine distribution, suggesting that the phase is not random between interfering pulses. Figure 4B shows the autocorrelation of pulses output by the laser diode. Here, a clear correlation between the successive pulses can be observed.

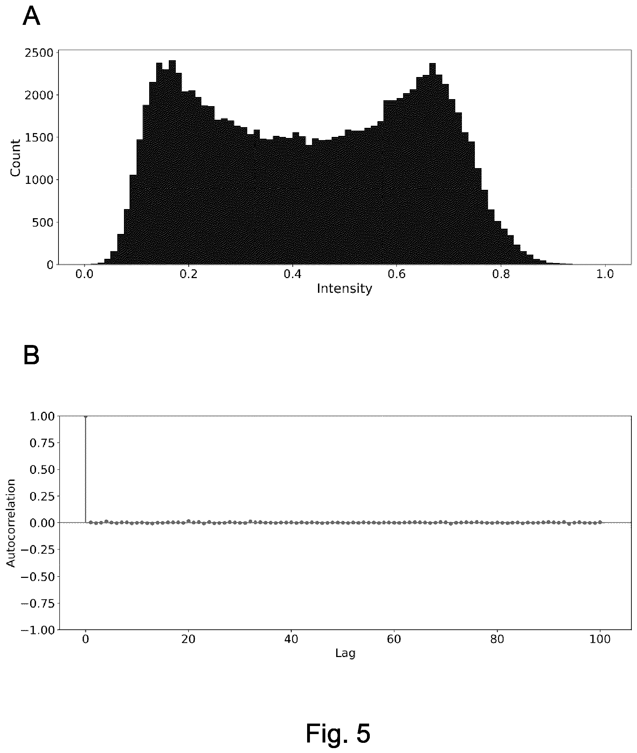

Figure 5A shows the intensity distribution obtained during experiments in which the pulses are seeded by spontaneous emission of photons from an external light source, again at 8GHz, according to embodiments described herein. In contrast to the distribution shown in Figure 4A, the intensity distribution of Figure 5A follows the arcsine distribution as expected from the interference between phase-randomised pulses. Figure 5B shows the autocorrelation of pulses for the same experimental setup as in Figure 5A; in contrast to the autocorrelation shown in Figure 4B, the correlation between pulses is eliminated in Figure 5B.

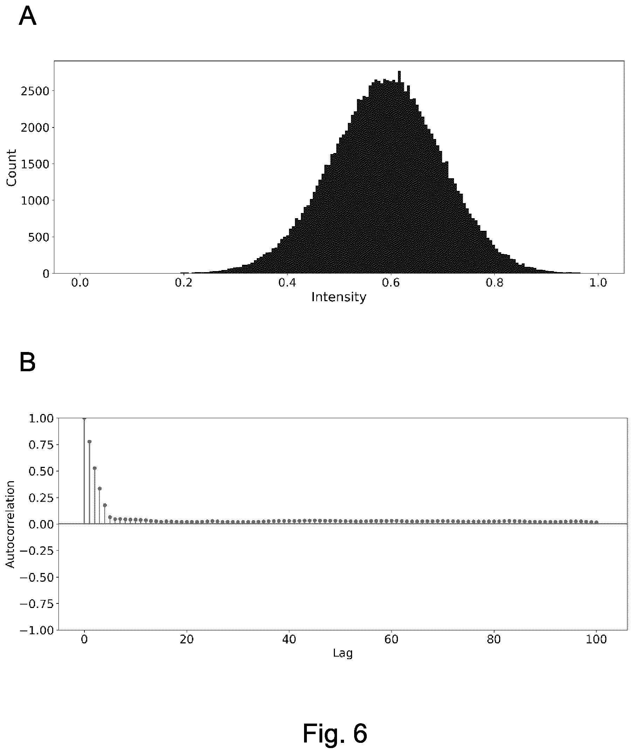

Figure 6A shows the intensity distribution obtained during experiments in which a standard laser diode is gain-switched at 10GHz and optical pulses so generated are sent into an asymmetric Mach-Zehnder interferometer with the output of the interferometer being measured with a photodiode. As in Figure 4A, the intensity distribution of Figure 6A does not follow the typical arcsine distribution, suggesting that the phase is not random between interfering pulses. Figure 6B shows the autocorrelation of pulses output by the laser diode. Here, a clear correlation between the successive pulses can be observed.

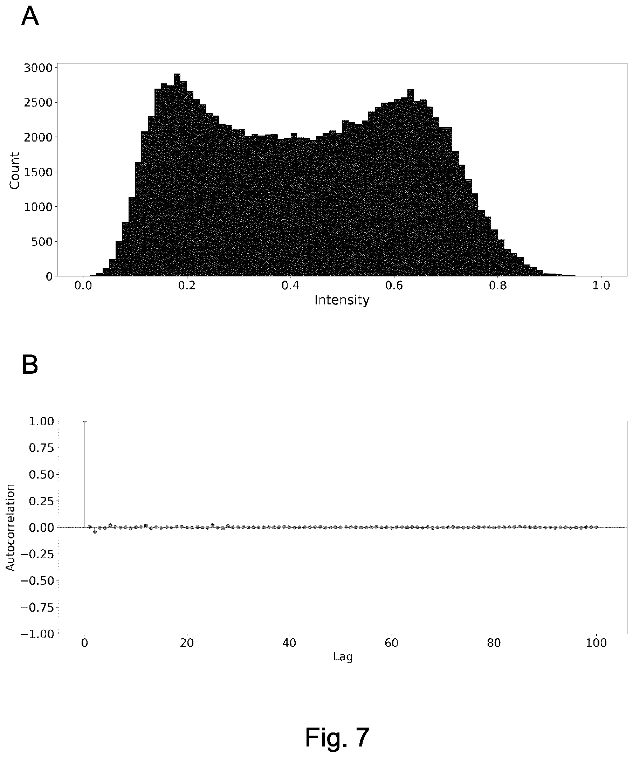

Figure 7A shows the intensity distribution obtained during experiments in which the pulses are seeded by spontaneous emission of photons from an external light source, again at 10GHz, according to embodiments described herein. In contrast to the distribution shown in Figure 6A, the intensity distribution of Figure 7A follows the arcsine distribution as expected from the interference between phase-randomised pulses. Figure 7B shows the autocorrelation of pulses for the same experimental setup as in Figure 7A; in contrast to the autocorrelation shown in Figure 6B, the correlation between pulses is eliminated in Figure 7B.

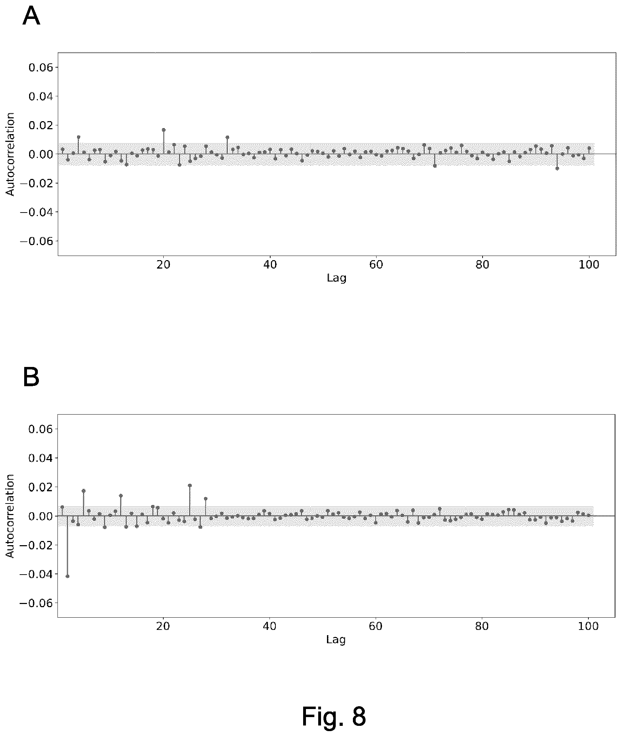

Figure 8A shows a magnified view of the auto-correlation results of Figure 5B (8GHz pulse rate), whilst Figure 8B shows a magnified view of the auto-correlation results of Figure 7B (10GHz pulse rate). In both cases, the results show that the samples are well within the 99% confidence bound, indicating the absence of correlation in the described embodiments.

Implementations of the subject matter and the operations described in this specification can be realized in digital electronic circuitry, or in computer software, firmware, or hardware, including the structures disclosed in this specification and their structural equivalents, or in combinations of one or more of them.

While certain embodiments have been described, these embodiments have been presented by way of example only and are not intended to limit the scope of the invention. Indeed, the novel methods, devices and systems described herein may be embodied in a variety of forms; furthermore, various omissions, substitutions and changes in the form of the methods and systems described herein may be made without departing from the spirit of the invention. The accompanying claims and their equivalents are intended to cover such forms or modifications as would fall within the scope and spirit of the invention.

## Claims

1. An optical transmitter comprising:
a laser source configured to generate pulses of light for output by the transmitter;
a pump for the laser source; and
a light source configured to emit photons via spontaneous emission, the light source being coupled into the cavity of the laser such that the photons emitted by the light source will seed the pulses of light generated by the laser, each successive pulse having a random phase.

2. An optical transmitter according to claim 1, wherein the laser source is a gain-switched laser source.

3. An optical transmitter according to any one of the preceding claims, wherein the light source is an amplified spontaneous emission, ASE, light source.

4. An optical transmitter according to claim 3, wherein the light source is one of:
a superluminescent diode;
a semiconductor optical amplifier; and
a fiber amplifier.

5. An optical transmitter according to any one of the preceding claims, further comprising an optical filter for selecting one or more wavelengths of light from the light source to be coupled into the cavity of the laser.

6. An optical transmitter according to any one of the preceding claims, further comprising an optical amplifier for amplifying the light output by the light source prior to its being coupled into the cavity of the laser.

7. An optical transmitter according to any one of the preceding claims, further comprising an optical filter for filtering the pulses generated by the laser source.

8. An optical transmitter according to any one of the preceding claims wherein the laser source is a solid state laser source.

9. An optical transmitter according to claim 8, wherein the laser source is a distributed-feedback, DFB, laser.

10. A quantum key distribution, QKD, system comprising an optical transmitter according to any one of the preceding claims.

11. A QKD system according to claim 10, wherein each pulse output by the transmitter is input to an interferometer comprising a first arm and a second arm.

12. A QKD system according to claim 11, wherein the first arm of the interferometer comprises a delay line and the second arm of the interferometer comprises a phase modulator.

13. A QKD system according to any one of claims 10 to 12, further comprising an intensity modulator for modulating the intensity of pulses output by the transmitter.

14. A quantum random number generate, QRNG, comprising an optical transmitter according to any one of the preceding claims.

15. A QRNG according to claim 14, wherein each pulse output by the transmitter is input to an interferometer comprising a first arm and a second arm, the first arm comprising a delay line; and
optionally comprising a photodiode for detecting the pulses that travel along the first and second arms of the interferometer.
